# EUROPÄISCHE PATENTSCHRIFT

(11) **EP 1 778 810 B1**
(45) Veröffentlichungstag und Bekanntmachung des Hinweises auf die Patenterteilung: **11.06.2008**
(21) Anmeldenummer: 05787614.6
(22) Anmeldetag: 10.08.2005
(51) Int. Cl.: C09G 3/00, A63C 5/056, C10M 107/50, C08L 83/04

(54) **GLEITMITTEL FÜR SPORTGERÄTE**
LUBRICANT FOR SPORTS EQUIPMENT
LUBRIFIANT POUR APPAREILS DE SPORT

(30) Priorität: 13.08.2004 DE 102004039409
(43) Veröffentlichungstag der Anmeldung: 02.05.2007
(73) Patentinhaber: HOLMENKOL Sport-Technologies GmbH & Co. KG, 71254 Ditzingen (DE)
(72) Erfinder: SCHÜTZ, Markus, 70565 Stuttgart (DE); BENDER, Holger, 71254 Ditzingen (DE); FELIX, Florian, 82467 Garmisch-Partenkirchen (DE)
(74) Vertreter: Beetz & Partner
(86) Internationale Anmeldenummer: PCT/EP2005/008698
(87) Internationale Veröffentlichungsnummer: WO 2006/018210

(56) Entgegenhaltungen:
- EP-A- 0 527 286
- DE-A1- 1 964 544
- US-A- 4 828 885
- US-B1- 6 358 893

## Beschreibung

Die Erfindung betrifft Mittel zur Verbesserung der Gleiteigenschaften von Sportgeräten, z. B. Wintersportgeräten, wie Ski, Zusammensetzungen, die sie enthalten, und ihre Verwendung zu diesem Zweck. Sie bezieht sich genauer auf modifizierte Siliconpolymere als Gleitmittel.

Nicht nur im Profisport sondern auch bei ambitionierten Amateuren gibt es ein beständiges Bedürfnis nach Gleitmitteln, die die Gleiteffekte von Sportgeräten wie z. B. Skiern noch verbessern können und beispielsweise zu noch höheren Spitzengeschwindigkeiten und einer noch besseren Beschleunigung führen.

Im Stand der Technik sind bereits zahlreiche Materialien zur Verbesserung der Gleiteigenschaften von Sportgeräten, z. B. Langlaufski, Alpinski und Snowboards, vorgeschlagen worden. Dabei handelt es sich im Allgemeinen um Paraffinwachse, fluorierte Wachse oder fluorierte Polymere, die auch Zusatzstoffe enthalten können (siehe beispielsweise WO 89/10950, EP 0 444 752, EP 1 009 544).

Die Gleitfläche von Wintersportgeräten besteht üblicherweise aus gesinterten Thermoplasten und insbesondere Polyethylen mit sehr hoher Dichte und hohem Molekulargewicht, wie z. B. UHW-PE, oder extrudierten Polymeren.

Diese Gleitmittel werden in der Regel in der Wärme, z.B. mit dem Bügeleisen, auf die Gleitfläche aufgeschmolzen, wobei hierbei die Gefahr besteht, dass beim Aufbringen der Wachse die Polyethylenskibeläge beschädigt werden, da der Schmelzpunkt von Polyethylen nur sehr wenig über dem Schmelzpunkt der Wachse und Polymere liegt.

Die Wachse können auch in verschiedene Formulierungen eingearbeitet und in Form von so genannten Flüssigwachsen ohne Wärmeeinwirkung aufgebracht werden. Mit solchen Lösungen hergestellte Beschichtungen sind jedoch oftmals nicht sehr beständig und müssen häufig erneuert werden.

Bei den herkömmlichen Wachsen hängt die Wahl des richtigen Wachses und/oder der zu verwendenden Zusatzstoffe maßgeblich von der Beschaffenheit des Schnees ab. Es ist daher meistens erforderlich, das Wachs bedarfgemäß auszuwählen und/oder mit Additiven zu versetzen, um bei gegebenen Schneeverhältnissen optimale Gleiteigenschaften zu erhalten; dies ist jedoch insbesondere für Anwender mit wenig Erfahrung oftmals schwierig.

Im Stand der Technik sind zwar auch Universalwachse bekannt, die bei unterschiedlichen Schneeverhältnissen gute Gleiteigenschaften ergeben; diese sind jedoch noch nicht vollständig zufrieden stellend.

Im Stand der Technik sind auch Skiwachse auf Siloxanbasis bekannt. In den Patenten US 4 828 885 und US 4 729 794 sind Skiwachszusammensetzungen beschrieben worden, die ein geradkettiges oder cyclisches, nicht flüchtiges Dimethylsiloxan enthalten. Die Druckschrift GB 755 794 betrifft Wachszusammensetzungen, die ein Methylpolysiloxan oder Methylphenylpolysiloxan enthalten.

Die europäische Patentanmeldung EP 527 286 offenbart Gleitmittel, die z. B. auch als Skiwachs eingesetzt werden können, die ein mit einer Kohlenwasserstoffgruppe modifiziertes Siloxan-Copolymer enthalten, wobei die Kohlenwasserstoffgruppe mindestens 24 Kohlenstoffatome aufweist.

Die Aufgabe der vorliegenden Erfindung besteht darin, den genannten Nachteilen abzuhelfen und Gleitmittel anzugeben, die unabhängig von der Schneebeschaffenheit die Gleiteigenschaften von Wintersportgeräten noch verbessern können und gleichzeitig einfach aufzubringen sind, ohne dass zwingend eine Heißbeschichtung erforderlich ist, und die ferner gut auf dem Belag haften.

Es wäre auch wünschenswert, in ähnlicher Weise bei Sportgeräten, die üblicherweise im Wasser eingesetzt werden, wie z. B. Wasserski, Booten, Rennbooten, Surfboards oder Schwimmanzügen, die Oberfläche mit einem Gleitmittel zu versehen, um die Gleiteigenschaften und damit insbesondere die erreichbare Geschwindigkeit noch zu verbessern. Dies trifft in gleicher Weise auch auf die Gleiteigenschaften von Sportgeräten an Luft zu, wie z. B. Segeln, Gleitschirmen oder Ultraleichtflugzeugen.

Die Erfindung bezieht sich daher auf modifizierte Siliconpolymere als Gleitmittel für Sportgeräte und insbesondere Wintersportgeräte, die unter den alkylmodifizierten Siliconpolymeren, die mindestens eine langkettige Kohlenwasserstoffgruppe mit 16 bis 18 Kohlenstoffatomen enthalten, und den organofunktionalisierten Siliconpolymeren, die mindestens eine funktionalisierte Kohlenwasserstoffgruppe enthalten, ausgewählt sind.

Die Kohlenwasserstoffgruppe(n) der alkylmodifizierten Siliconpolymere können geradkettig oder verzweigt, gesättigt oder ungesättigt vorliegen. Sie können gegebenenfalls auch einen oder mehrere Substituenten aufweisen, die beispielsweise unter den Halogenatomen, wie Fluor oder Chlor, Hydroxy, Carboxy oder Amino ausgewählt sind.

Die organofunktionalisierten Siliconpolymere enthalten mindestens eine funktionalisierte Kohlenwasserstoffgruppe, die eine funktionelle Gruppe und insbesondere ein oder mehrere Halogenatome und besonders Fluoratome aufweist. Auch die funktionalisierten Kohlenwasserstoffgruppen der organofunktionalisierten Siliconpolymere können gesättigt oder ungesättigt, geradkettig oder verzweigt vorliegen. Bei der oder den funktionalisierten Gruppen kann es sich insbesondere um halogenierte und besonders um fluorierte Gruppen handeln. Die Gruppen können auch perfluoriert sein.
Als besonders bevorzugtes Beispiel kann die 3,3,3-Trifluorpropylgruppe genannt werden.

Bei den Siliconpolymeren kann es sich um Homo- oder Copolymere handeln und sie können geradkettig, verzweigt oder cyclisch vorliegen.

Bevorzugte modifizierte Siliconpolymere gemäß der vorliegenden Erfindung sind die Homo- oder Copolymere der folgenden Formel (I): 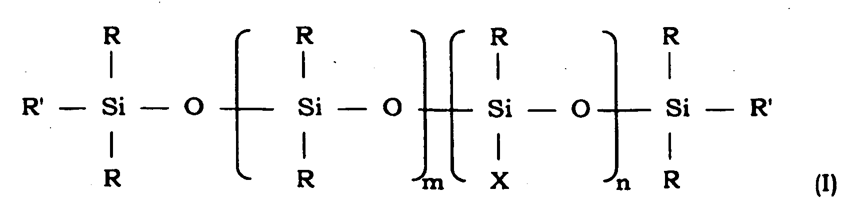 worin bedeuten:
die Gruppen R, die gleich oder verschieden sind, geradkettige oder verzweigte C₁₋₁₀-Alkylgruppen oder Phenylgruppen, wobei vorzugsweise mindestens 80 % der Gruppen R und noch bevorzugter alle Gruppen R Methyl bedeuten,
die Gruppen R', die identisch oder voneinander verschieden sind, Wasserstoff, C₁₋₁₀-Alkyl, Phenyl, Vinyl oder Hydroxy;
die Gruppe X eine C₁₆₋₅₀-Alkylgruppe oder eine halogenierte C₁₋₁₀-Alkylgruppe, vorzugsweise eine fluorierte C₁₋₁₀-Alkylgruppe,
m 0 oder eine ganze Zahl von 1 bis 50, insbesondere 0 bis 15 und besonders bevorzugt 0 bis 10,
n eine ganze Zahl von 1 bis 20, insbesondere 1 bis 5 und besonders bevorzugt 1 bis 3.

Bei der Gruppe X handelt es sich erfindungsgemäß vorzugsweise um eine geradkettige halogenierte Alkylgruppe und insbesondere die 3,3,3-Trifluorpropylgruppe.

Erfindungsgemäß werden die modifizierten Siliconpolymere besonders bevorzugt, die bei Umgebungstemperatur flüssig sind; besonders bevorzugte modifizierte Siliconpolymere besitzen eine Viskosität im Bereich von 10 000 bis 30 000 cSt (10000 bis 30000 mm²/s), wobei die Viskosität bei 25 °C gemessen wird. Solche modifizierten Siliconpolymere führen zu einer besonders deutlichen Verbesserung der Gleiteigenschaften. Diese Polymere haben den weiteren Vorteil, dass sie besonders einfach auf die Oberfläche des jeweiligen Sportgeräts aufgebracht werden können, ohne dass ein Erwärmen erforderlich ist. Die Gleitmittel können beispielsweise einfach mit einem Lappen oder Schwamm aufgerieben oder gegebenenfalls auch als Aerosol beispielsweise mithilfe eines Aerosolbehälters oder Pumpflakons aufgebracht werden.

Diese erfindungsgemäßen Gleitmittel können in reiner Form aufgebracht werden, sie können jedoch auch Zusatzstoffe enthalten oder gegebenenfalls im Gemisch mit weiteren Gleitmitteln, wie einem Paraffinwachs, oder Lösungsmitteln verwendet werden. Sie können im Falle von Wintersportgeräten auch in herkömmlich verwendete Gleitmittel wie Paraffinwachse oder fluorierte Wachse eingearbeitet werden, oder z. B. bei Booten in die zur Beschichtung verwendete Lackschicht eingebracht werden.

Es können beispielsweise Zusammensetzungen verwendet werden, die in Kombination mit den erfindungsgemäßen modifizierten Siliconpolymeren 0,1 bis 98 Gew.-% übliche Paraffinwachse und/oder fluorierte Wachse enthalten. Die erfindungsgemäßen modifizierten Siliconpolymere machen vorzugsweise 2 - 30 Gew.-% und noch bevorzugter 5 - 20 Gew.-% des Gesamtgewichts des Gleitmittels aus. Es hat sich nämlich überraschend herausgestellt, dass auch übliche Paraffinwachse und/oder Fluorwachse, die die erfindungsgemäßen modifizierten Siliconpolymere im Gemisch enthalten, auf Schnee zu deutlich besseren Gleiteigenschaften führen als die bekannten Paraffinwachse und/oder Fluorwachse alleine. Gegebenenfalls können diese Zusammensetzungen auch einen Viskositätsmadifizierer enthalten, wie Lösungsmittel.

Die erfindungsgemäßen modifizierten Siliconpolymere können auch zusammen mit Lösungsmitteln verwendet werden, insbesondere wenn es sich um zähflüssige oder wachsartige Siliconpolymere mit höherem Molekulargewicht handelt.

Geeignete Lösungsmittel sind Siliconöle wie Cyclopentasiloxan oder Cyclomethicon, flüssige Kohlenwasserstoffe wie beispielsweise ISO-PARs, Alkohole wie Isopropanol und Ethanol. Bevorzugt werden Siliconöle verwendet, insbesondere Cyclopentasiloxan oder Cyclomethicon. Es können beispielsweise Zusammensetzungen verwendet werden, die 80 - 99 Gew.-% eines oder mehrerer Lösungsmittel, 1 - 20 Gew.-% eines oder mehrerer modifizierter Siliconpolymere, wie sie oben definiert wurden, und gegebenenfalls Zusatzstoffe für die Formulierung enthalten.

Es ist erfindungsgemäß ferner möglich, die modifizierten Siliconpolymere auf einen üblichen Skiwachsbelag, d.h. einer als Grundwachs dienenden Gleitmittelschicht, aufzutragen, beispielsweise einem Paraffinwachs und/oder Fluorwachs. Die erfindungsgemäßen modifizierten Siliconpolymere können jedoch direkt auf die Gleitfläche aufgebracht werden, ohne dass zuvor ein Grundwachs aufgetragen wird.

Besonders günstig ist es, zunächst ein erfindungsgemäßes modifiziertes Siliconpolymer direkt auf den Belag aufzutragen und anschließend ein weiteres herkömmliches Gleitmittel, wie z. B. ein fluoriertes Wachs oder Paraffinwachs, aufzutragen. Hierdurch können nicht nur die Gleiteigenschaften verbessert werden, sondern es kann auch die Abriebfestigkeit erhöht und die Haftung verbessert werden, so dass das Gleitmittel nicht so häufig erneuert werden muss.

Die erfindungsgemäß modifizierten Siliconpolymere haben außerdem den Vorteil, dass sie chemisch inert und gesundheitlich nicht bedenklich sind und daher keine besonderen Sicherheitsmaßnahmen beim Aufbringen der Gleitmittel beachtet werden müssen.

Erfindungsgemäß besonders bevorzugte alkylmodifizierte Silicone sind die alkylmodifizierten Polydimethylsiloxane, die eine oder mehrere Alkylketten mit 16 bis 18 Kohlenstoffatomen oder Gemische solcher Ketten aufweisen.

Besonders bevorzugte organofunktionalisierte Siliconpolymere sind die Trifluorpropylmethyl/dimethylsiloxan-Copolymere, die endständige Vinyl- oder Hydroxygruppen aufweisen.

Die erfindungsgemäßen modifizierten Siliconpolymere können die Gleiteigenschaften von verschiedenartigsten Sportgeräten verbessern. Als Beispiele sind insbesondere Ski, Langlaufski, Snowboards, Schlitten, Boote, Surfboards, Wasserski, Segelflugzeuge, Gleitschirme oder Ultraleichtflugzeuge zu nennen.

Im Folgenden werden zur näheren Erläuterung der Erfindung Beispiele angegeben.

### Beispiel 1

Gemäß dem folgenden Test wurden die Gleiteigenschaften von Langlaufski ermittelt, wobei ein Paar Ski mit einem erfindungsgemäßen Gleitmittel und ein Paar Ski mit einem Gleitmittel des Standes der Technik präpariert wurde.

Zwei identische Paar Skatingski wurden zunächst mit Betamix Worldcup RED der Firma Holmenkol grundpräpariert. Dazu wurde das Wachs mittels Wachsbügeleisen aufgeschmolzen, mit einer Plastikklinge abgezogen und danach ausgebürstet. Bei Betamix Worldcup RED handelt es sich um ein Paraffinwachs ohne fluorierte Bestandteile.

Auf diesen Untergrund wurden dann jeweils die zu testenden Wachsmischungen aufgebracht. Das eine Paar Ski wurde nochmals mit Betamix Worldcup RED der Firma Holmenkol beschichtet (Vergleichsbeispiel). Das andere Paar wurde mit einem erfindungsgemäßen alkylmodifizierten Siliconpolymer mit einer langkettigen Alkylkette (16-18 Kohlenstoffatome) gewachst. In beiden Fällen wurde das Wachs mittels Wachsbügeleisen aufgetragen, dann das überstehende Wachs mit einer Plastikklinge abgezogen und danach der Skibelag mit einer SteelMicro Finish Bürste ausgebürstet.

Der Test erfolgte auf einer abschüssigen, gespurten Loipe. Die für eine vorgegebene Strecke benötigten Zeiten wurden mittels Lichtschranke ermittelt. Pro Skipaar wurden abwechselnd jeweils drei Testfahrten durchgeführt, wobei alle Fahrten vom selben Skifahrer ausgeführt wurden.

### Bedingungen während des Tests:

| | |
|---|---|
| Wetter: | bedeckt, Regen |
| Lufttemperatur: | 6,2 °C |
| Schneetemperatur: | -0,7 °C |
| Luftfeuchtigkeit: | 72,5 % |
| Schneeart | Altschnee grob (Korngröße 1,5 mm) |
| Loipe: | nass weich |

Das Ergebnis ist in der folgenden Tabelle zusammengefasst, wobei aus den ermittelten Zeiten jeweils der Mittelwert berechnet wurde.

| | Mittelwert [s] | Abstand [%] |
|---|---|---|
| Erfindungsgemäßes alkylmodifizier tes Siliconpolymer | 6,53 | - |
| Holmenkol Betamix Worldcup RED | 6,56 | 0,46 % |

Mit dem erfindungsgemäßen alkylmodifizierten Siliconpolymer konnte also die benötigte Zeit um 0,46 % verbessert werden.

### Beispiel 2

Dieses Beispiel zeigt die Verbesserung der Gleiteigenschaften die mit einer erfindungsgemäßen Gleitmittelzusammensetzung im Vergleich mit einem Gleitmittel des Standes der Technik erzielt werden kann.

Identische Skatingski wurden zunächst mit Betamix Worldcup RED der Firma Holmenkol grundpräpariert. Dazu wurde das Wachs mittels Wachsbügeleisen aufgeschmolzen, mit einer Plastikklinge abgezogen und danach ausgebürstet.

Auf diesen Untergrund wurden dann jeweils die zu testenden Wachsmischungen aufgebracht: H7 Yellow der Firma Briko (Vergleichsbeispiel) bzw. Gemisch aus 80 Gew.-% NordicGlider SF 0/2 der Firma Holmenkol und 20 Gew.-% eines alkylmodifizierten Siliconpolymers mit einer langkettigen Alkylkette (16-18 Kohlenstoffatome). Dieses Gemisch wird im Folgenden als Testmischung A bezeichnet.

In beiden Fällen wurde das Wachs mittels Wachsbügeleisen aufgetragen, dann das überstehende Wachs mit einer Plastikklinge abgezogen und danach der Skibelag mit einer SteelMicro Finish Bürste ausgebürstet. Sowohl bei H7 Yellow als auch bei NordicGlider SF 0/2 handelt es sich um perfluoralkanhaltige Produkte, die in der Praxis bei Skirennen eingesetzt werden.

Der Test erfolgte auf einer abschüssigen, gespurten Loipe. Die für eine vorgegebene Strecke benötigten Zeiten wurden mittels Lichtschranke ermittelt. Pro Skipaar wurden abwechselnd jeweils drei Testfahrten durchgeführt, wobei alle Fahrten vom selben Skifahrer ausgeführt wurden.

### Bedingungen während des Tests:

| Wetter: | sonnig |
|---|---|
| Lufttemperatur: | -1,0 °C |
| Schneetemperatur: | -4,9 °C |
| Luftfeuchtigkeit: | 43,6 % |
| Schneeart | Altschnee fein (Korngröße 1 mm) |
| Loipe: | trocken fest |

Das Ergebnis ist in der folgenden Tabelle zusammengefasst, wobei aus den ermittelten Zeiten jeweils der Mittelwert berechnet wurde.

| | Mittelwert [s] | Abstand [%] |
|---|---|---|
| Testmischung A | 12,42 | - |
| Briko H7 Yellow | 12,45 | 0,30 % |

Die mit Testmischung A gewachsten Ski waren um ca. 0,30 % schneller.

## Patentansprüche

1. Gleitmittel für Sportgeräte, das mindestens ein modifiziertes Siliconpolymer enthält, **dadurch gekennzeichnet, dass** es sich bei dem modifizierten Siliconpolymer um mindestens ein alkylmodifiziertes Siliconpolymer, das mindestens eine gesättigte oder ungesättigte, geradkettige oder verzweigte Kohlenwasserstoffgruppe mit 16 bis 18 Kohlenstoffatomen aufweist, und/oder mindestens ein organofunktionalisiertes Siliconpolymer, das mindestens eine geradkettige oder verzweigte, gesättigte oder ungesättigte funktionalisierte Kohlenwasserstoffgruppe mit 1 bis 10 Kohlenstoffatomen enthält, handelt.

2. Gleitmittel nach Anspruch 1, **dadurch gekennzeichnet, dass** das oder die modifizierte(n) Siliconpolymer(e) 0,1 bis 100 Gew.-%, bezogen auf das Gesamtgewicht des Gleitmittels, ausmachen.

3. Gleitmittel nach einem der Ansprüche 1 oder 2, **dadurch gekennzeichnet, dass** die modifizierten Siliconpolymere unter den folgenden Verbindungen der Formel (I) ausgewählt sind: 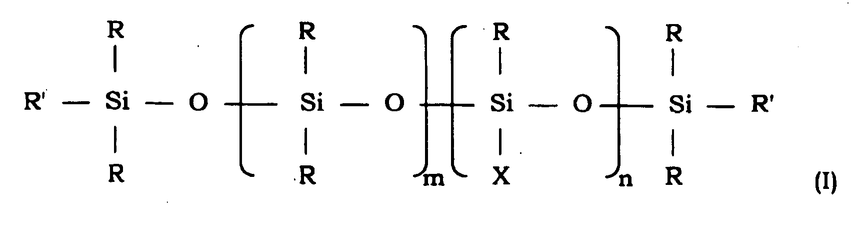 worin bedeuten:
die Gruppen R, die gleich oder verschieden sind, geradkettige oder verzweigte C₁₋₁₀-Alkylgruppen oder Phenylgruppen, wobei vorzugsweise mindestens 80 % der Gruppen R und noch bevorzugter alle Gruppen R Methyl bedeuten,
die Gruppen R', die identisch oder voneinander verschieden sind, Wasserstoff, C₁₋₁₀-Alkyl, Phenyl, Vinyl oder Hydroxy;
die Gruppe X eine C₁₆₋₁₈-Alkylgruppe, die gegebenenfalls substituiert sein kann, oder eine halogenierte C₁₋₁₀-Alkylgruppe, vorzugsweise eine fluorierte C₁₋₁₀-Alkylgruppe,
m 0 oder eine ganze Zahl von 1 bis 50,
n eine ganze Zahl von 1 bis 20.

4. Gleitmittel nach einem der Ansprüche 1 bis 3, **dadurch gekennzeichnet, dass** das organofunktionalisierte Siliconpolymer ein Trifluorpropylmethyl/dimethylsiloxan-Copolymer ist.

5. Gleitmittel nach einem der Ansprüche 1 bis 4, **dadurch gekennzeichnet, dass** es ferner herkömmliche Paraffinwachse und/oder Fluorwachse und/oder Lösungsmittel enthält.

6. Zusammensetzung zur Verbesserung der Gleiteigenschaften von Sportgeräten, **dadurch gekennzeichnet, dass** sie enthält:
• 70 - 98 Gew.-% eines oder mehrerer Paraffinwachse und/oder Fluorwachse,
• 2 - 30 Gew.-% eines oder mehrerer modifizierter Siliconpolymere, wie sie in Anspruch 1 bis 4 definiert wurden, und
• gegebenenfalls einen oder mehrere Viskositätsmodifizierer.

7. Zusammensetzung zur Verbesserung der Gleiteigenschaften von Sportgeräten, **dadurch gekennzeichnet, dass** sie enthält:
• 80 - 99 Gew.-% eines oder mehrerer Lösungsmittel,
• 1 - 20 Gew.-% eines oder mehrerer modifizierter Siliconpolymere, wie sie in Anspruch 1 bis 4 definiert wurden,
• gegebenenfalls Zusatzstoffe für die Formulierung.

8. Verwendung von modifizierten Siliconpolymeren oder Zusammensetzungen nach einem der vorhergehenden Ansprüche zur Verbesserung der Gleiteigenschaften von Wintersportgeräten auf Schnee, wobei die modifizierten Siliconpolymere oder Zusammensetzungen als solche auf den nicht vorbehandelten Belag eines Wintersportgeräts oder einen mit einem weiteren Gleitmittel vorbehandelten Belag eines Wintersportgeräts oder im Gemisch mit einem weiteren Gleitmittel auf den Belag eines Wintersportgeräts aufgebracht werden.

9. Verwendung von modifizierten Siliconpolymeren oder Zusammensetzungen nach einem der vorhergehenden Ansprüche zur Verbesserung der Gleiteigenschaften von Sportgeräten in Wasser.

## Claims

1. Lubricant for sports equipment, which contains at least one modified silicone polymer, **characterized in that** the modified silicone polymer is at least one alkyl-modified silicone polymer which comprises at least one saturated or unsaturated, straight-chain or branched hydrocarbon group having 16 to 18 carbon atoms, and/or at least one organofunctionalized silicone polymer which comprises at least one straight-chain or branched, saturated or unsaturated functionalized hydrocarbon group having 1 to 10 carbon atoms.

2. Lubricant according to claim 1, **characterized in that** the modified silicone polymer(s) account(s) for 0.1 to 100 % by weight, relating to the overall weight of the lubricant.

3. Lubricant according to any one of the claims 1 or 2, **characterized in that** the modified silicone polymers are selected among the following compounds of formula (I): 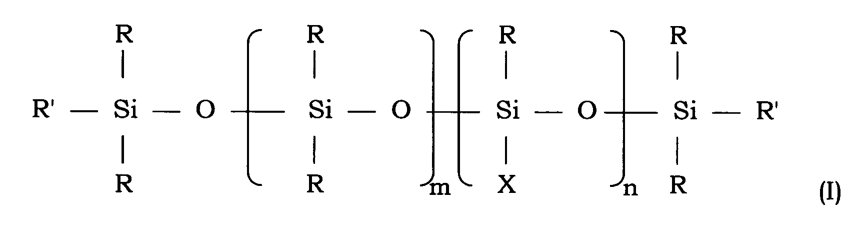 wherein:
the groups R, which are identical or different, are straight-chained or branched alkyl groups having 1 to 10 carbon atoms or phenyl groups, preferably at least 80 % of the groups R, and still more preferably, all groups R being methyl,
the groups R', which are identical or different, are hydrogen, alkyl having 1 to 10 carbon atoms, phenyl, vinyl or hydroxy;
the group X is an alkyl group having 16 to 18 carbon atoms, which can possibly be substituted, or a halogenated alkyl group having 1 to 10 carbon atoms, preferably a fluorinated alkyl group having 1 to 10 carbon atoms,
m is 0 or an integer from 1 to 50,
n is an integer from 1 to 20.

4. Lubricant according to any one of the claims 1 to 3, **characterized in that** the organofunctionalized silicone polymer is a copolymer of trifluoropropylmethyl/ dimethylsiloxane.

5. Lubricant according to any one of the claims 1 to 4, **characterized in that** it further comprises conventional paraffin waxes and/or fluor waxes and/or solvents.

6. Composition for improving the gliding properties of sports equipment, **characterized in that** it contains:
• 70 - 98 % by weight of one or a plurality of paraffin waxes and/or fluor waxes,
• 2 - 30 % by weight of one or a plurality of modified silicone polymers as they were defined in claims 1 to 4, and
• if necessary, one or more viscosity modifiers.

7. Composition for improving the gliding properties of sports equipment, **characterized in that** it contains:
• 80 - 99 % by weight of one or a plurality of solvents,
• 1 - 20 % by weight of one or a plurality of modified silicone polymers as they were defined in claims 1 to 4, and
• if necessary, additives for the formulation.

8. Use of modified silicone polymers or compositions according to any one of the preceding claims for improving the gliding properties of winter sports equipment on snow, the modified silicone polymers or compositions as such being applied to the not pretreated sole of a winter sports article or to the sole of a winter sports article which has been pretreated with a further lubricant, or the silicone polymers are applied in a mixture with a further lubricant to the sole of a winter sports article.

9. Use of modified silicone polymers or compositions according to any one of the preceding claims for improving the gliding properties of sports equipment in water.

## Revendications

1. Lubrifiant pour appareils de sport, qui comprend au moins un copolymère de silicone modifié, **caractérisé en ce que** le polymère de silicone modifié est au moins un polymère de silicone modifié par un groupe alkyle, qui présente au moins un groupe hydrocarbure saturé ou insaturé, linéaire ou ramifié ayant de 16 à 18 atomes de carbone et/ou au moins un polymère de silicone fonctionnalisé par un groupe organique, qui comprend au moins un groupe hydrocarbure linéaire ou ramifié, saturé ou insaturé, fonctionnalisé ayant de 1 à 10 atomes de carbone.

2. Lubrifiant selon la revendication 1, **caractérisé en ce que** le ou les polymères de silicone modifiés constituent 0,1 à 100 % en poids du poids total du lubrifiant.

3. Lubrifiant selon l'une des revendications 1 ou 2, **caractérisé en ce que** les polymères de silicone modifiés sont choisis parmi les composés suivants de formule (I) : 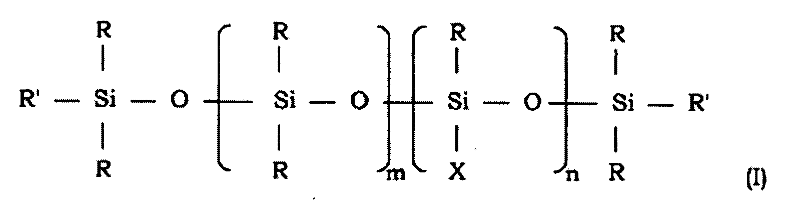 dans laquelle :
les groupes R, qui sont identiques ou différents, représentent des groupes alkyles en C₁₋₁₀ linéaires ou ramifiés ou des groupes phényles, où de préférence au moins 80 % des groupes R et encore plus préférentiellement tous les groupes R représentent le méthyle,
les groupes R', qui sont identiques ou différents, représentent l'hydrogène, un alkyle en C₁₋₁₀, un phényle, un vinyle ou un hydroxy ;
le groupe X représente un groupe alkyle en C₁₆₋₁₈, qui peut être le cas échéant substitué, ou un groupe alkyle en C₁₋₁₀ halogéné, de préférence un groupe alkyle en C₁₋₁₀ fluoré,
m représente 0 ou un nombre entier de 1 à 50,
n représente un nombre entier de 1 à 20.

4. Lubrifiant selon l'une des revendications 1 à 3, **caractérisé en ce que** le polymère de silicone fonctionnalisé par un groupe organique est un copolymère de trifluoropropylméthyle/ diméthylsiloxane.

5. Lubrifiant selon l'une des revendications 1 à 4, **caractérisé en ce qu'il** comprend en outre des cires de paraffine traditionnelles et/ou des cires fluorées et/ou des solvants.

6. Composition pour l'amélioration des propriétés de lubrification des appareils de sports, **caractérisée en ce qu'elle** contient :
- 70 à 98 % en poids d'une ou de plusieurs cires de paraffine et/ou de cires fluorées,
- 2 à 30 % en poids d'un ou de plusieurs polymères de silicone modifiés, tels qu'ils ont été définis dans la revendication 1 à 4, et
- le cas échéant un ou plusieurs régulateurs de viscosité.

7. Composition pour l'amélioration des propriétés de glissement des appareils de sports, **caractérisée en ce qu'elle** contient :
- 80 à 99 % en poids d'un ou de plusieurs solvants,
- 1 à 20 % en poids d'un ou de plusieurs polymères de silicone modifiés, tels qu'ils ont été définis dans la revendication 1 à 4, et
- le cas échéant des additifs pour la formulation.

8. Utilisation de polymères de silicone modifiés ou de compositions selon l'une des revendications précédentes pour l'amélioration des propriétés de glissement des appareils de sport d'hiver sur la neige, où les polymères de silicone modifiés ou compositions sont déposés en tant que tels sur le revêtement non traité au préalable d'un appareil de sport d'hiver ou d'un revêtement d'un appareil de sport d'hiver prétraité avec un autre lubrifiant ou en mélange avec un autre lubrifiant sur le revêtement d'un appareil de sport d'hiver.

9. Utilisation de polymères de silicone modifiés ou de compositions selon l'une des revendications précédentes pour l'amélioration des propriétés de glissement des appareils de sport dans l'eau.
